# EUROPEAN PATENT APPLICATION

(11) **EP 3 451 717 A1**
(43) Date of publication of application: **06.03.2019**
(21) Application number: 18172262.0
(22) Date of filing: 15.05.2018
(51) Int. Cl.: H04W 4/70, H04L 29/08

(54) **MESSAGE PUSHING SYSTEM, CLIENT EQUIPMENT AND MESSAGE PUSHING METHOD THEREOF**

(30) Priority: 28.08.2017 TW 106129191
(71) Applicant: Askey Computer Corp., 23585 New Taipei City (TW); Askey Technology (Jiangsu) Ltd., 215200 Wujiang Jiangsu (CN)
(72) Inventor: WEI, Cheng-Hsi, 100 Taipei City (TW)
(74) Representative: Emde, Eric

(57) **Abstract**

A message pushing system, a client equipment and a message pushing method thereof are provided. In the method, the client equipment resides in a local network, and the client equipment registers with a local server and a remote server via the local network and an external network. Then, the client equipment publishes messages or receives subscribed messages via at least one of the local network and remote network base on a publishing/subscribing mechanism. Accordingly, no matter whether the client equipment can connect to the external network, if another client equipment can connect to any server via the local or external network, published messages can be transmitted to the client equipment or another published message from the client equipment can be successfully received.

## Description

### BACKGROUND

### Field of the Disclosure

The disclosure relates to a message delivery method and more particularly, to a message pushing system, a client equipment and a message pushing method thereof.

### Description of Related Art

Along with rapid development of technologies, a variety of electronic devices, such as sensors, conventional home appliances, illumination devices, switch devices and so on, gradually and widely apply communication functions, such that the devices can transmit or receive messages and can be controlled by other devices or collect information through other devices.

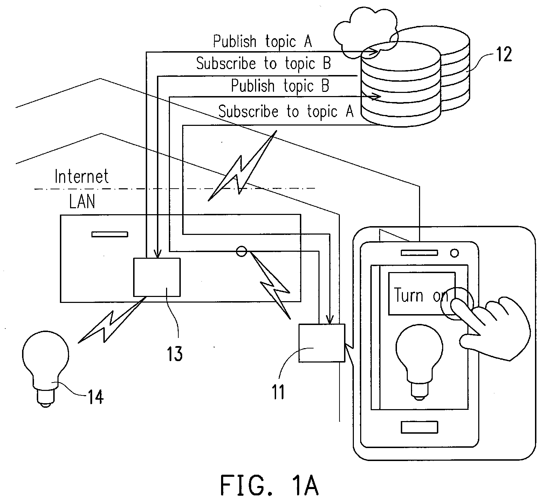

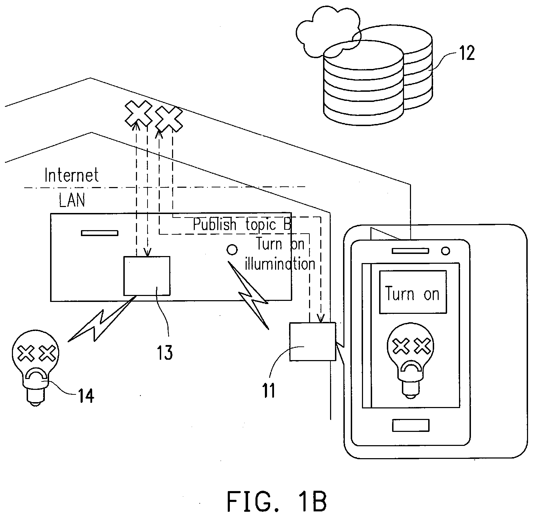

Although hardware specifications of part of the electronic devices cannot achieve high network bandwidths, complex communication protocols or high hardware requirements of the communication functions, theses electronic devices can achieve message delivery with lower network bandwidths and hardware resources through a publishing/subscribing (PubSub) mechanism. Additionally, in order to make it easier for users to interact through other devices, some service providers launch internet of things (IoT)-based cloud platforms to provide a variety of network services. FIG. 1A and FIG. 1B are schematic diagrams illustrating conventional publishing/subscribing mechanisms. Referring to FIG. 1A first, it is assumed that a mobile client equipment 11 subscribes to a topic A (e.g., a bulb state) from a cloud platform 12, and a fixed client equipment 13 subscribes a topic B (e.g., turning on/turning off illumination) from the cloud platform 12. The mobile client equipment 11 publishes a message of turning illumination related to the topic B to the cloud platform 12 (step S 15), the cloud platform 12 transmits the message to all subscribers (which include the fixed client equipment 13) of the topic B. The fixed client equipment 13 may turn on a bulb 14 through a Z-Wave technique, obtain a state that the bulb 14 is turned on, and publish the state to the cloud platform 12, such that the state is transmitted to all subscribers (i.e., the mobile client equipment11) of the topic A.

However, referring to FIG. 1B, when the mobile client equipment 11 fails to connect to the Internet, the aforementioned operation process cannot be successfully completed. Even though the mobile client equipment 11 and the fixed client equipment 13 reside in the same local area network, the mobile client equipment 11, due to the failure in connecting to the cloud platform 12, cannot achieve the service operation. Accordingly, the current service architecture still needs improvement.

### SUMMARY

The invention is defined in the independent claims. The dependent claims define preferred embodiments. Accordingly, the disclosure provides a message pushing system, a client equipment and a message pushing method thereof, by which a server which also resides in a local area network may be added, thereby solving the issue that the client equipment fails to connect to the Internet for services.

Preferably, a message pushing system of the disclosure includes a first server, a second server and a first client equipment. The first server resides in a first network. The second server resides in a second network, and the second network is different from the first network. The first client equipment resides in the first network, registers with the first server and the second server, and transmits and receives messages via at least one of the first server and the second server based on a publishing/subscribing mechanism.

Preferably, the first client equipment subscribes to both the first server and the second server and publishes to both the first server and the second server.

Preferably, the message pushing system further includes a second client equipment. The second client equipment determines whether to subscribe to either the first server or the second server.

Preferably, the second client equipment subscribes to a topic published by the first client equipment from one of the first server and the second server.

Preferably, the first client equipment subscribes to a topic published by the second client equipment from both the first server and the second server.

Preferably, the first client equipment performs an operation of the first server.

Preferably, a message pushing method of the disclosure includes the following steps: providing a server residing in first network; transmitting a registration message via a first network and a second network, wherein the second network is different from the first network; transmitting and receiving messages via at least one of the first server and the second server based on a publishing/subscribing mechanism.

Preferably, the step of transmitting and receiving the messages via at least one of the first server and the second server based on the publishing/subscribing mechanism includes subscribing through both the first network and the second network; and publishing through both the first network and the second network.

Preferably, additionally, a client equipment of the disclosure resides in a first network and includes a communication circuit and a processor. The communication circuit is configured to transmit and receive messages. The processor is coupled to the communication circuit, and configured to transmit a registration message through the communication circuit via the first network and a second network, and transmit and receive the message via one of the first network and the second network based on a publishing/subscribing mechanism, wherein the second network is different from the first network.

Preferably, the processor subscribes through the communication circuit via both the first network and the second network and publishes via both the first network and the second network.

Preferably, the publishing/subscribing mechanism complies with a message queue telemetry transport (MQTT) protocol.

Based on the above, the client equipment, after registering with the servers residing in different networks, can subscribe to the topics of the two servers or publish the messages thereto. When another client equipment subscribes to or publishes the same topic, the second server residing in the second network, no matter whether being disconnected, still can successfully publish the message or receive the subscribed message via the first network.

In order to make the aforementioned and other features and advantages of the disclosure more comprehensible, several embodiments accompanied with figures are described in detail below.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1A and FIG. 1B are schematic diagrams illustrating conventional publishing/subscribing mechanisms.
FIG. 2 is a schematic diagram illustrating a message pushing system according to an embodiment of the disclosure.
FIG. 3 is a block diagram illustrating the client equipment according to an embodiment of the disclosure.
FIG. 4 is a message flow chart illustrating a message pushing method in a remote access scenario according to an embodiment of the disclosure.
FIG. 5 is a message flow chart illustrating a message pushing method in a local access scenario according to an embodiment of the disclosure.
FIG. 6A and FIG. 6B are schematic diagrams of a first scenario example illustrating that a client equipment is capable of connecting to a wide area network, and another client equipment resides in a local area network.
FIG. 7 is a schematic diagram of a second scenario example illustrating that a client equipment fails to connect to the wide area network, and another client equipment resides in the local area network.
FIG. 8A and FIG. 8B are schematic diagrams of a third scenario example illustrating that a client equipment is capable of connecting to the wide area network, and another client equipment resides in a local area network.

### DESCRIPTION OF EMBODIMENTS

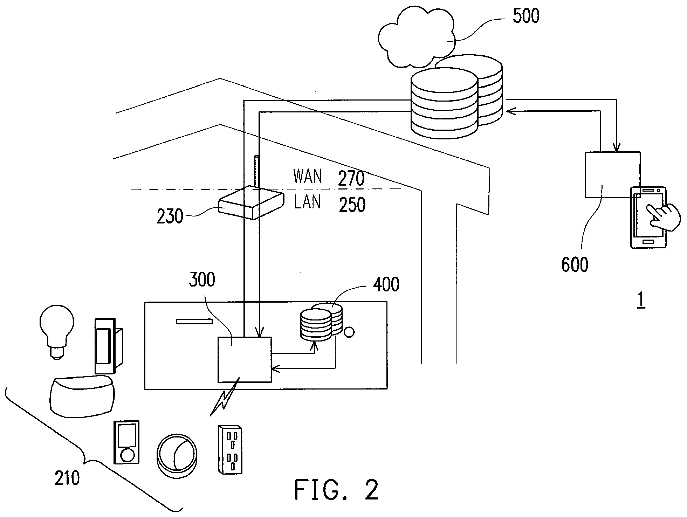

FIG. 2 is a schematic diagram illustrating a message pushing system 1 according to an embodiment of the disclosure. The message pushing system 1 includes one or more controlled devices 210, a client equipment 300, a local server 400, a network access equipment 230, a remote server 500 and a client equipment 600.

The controlled device 210 may be an electronic device, such as a smart bulb, an intelligent remote control switch, an intelligent door lock and an intelligent sensor, which supports a Z-Wave, Bluetooth, Wi-Fi, ZigBee communication technique or other wireless communication techniques for transmitting or receiving messages.

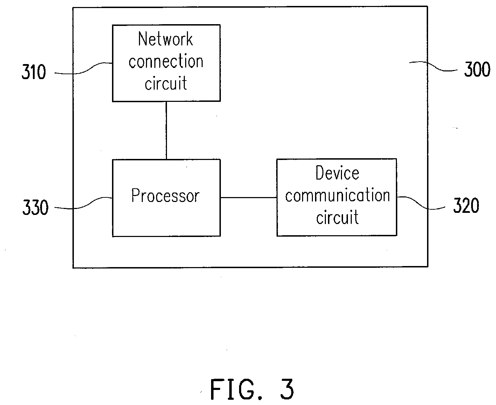

FIG. 3 is a block diagram illustrating the client equipment according to an embodiment of the disclosure. Referring to FIG. 3, the client equipment 300 at least includes, but not limited to, a network connection circuit 310, a device communication circuit 320 and a processor 330. The network connection circuit 310 may be a network interface card, processor, circuit or chipset for supporting a wireless communication technique (for example, Wi-Fi, Bluetooth, 4^{th} generation (4G) mobile communication (long term evolution (LTE) communication) or a wired communication technique (for example, Ethernet, optical fiber communication), and the network connection circuit 310 complies with a message queue telemetry transport (MQTT) protocol. The device communication circuit 320 may be a network interface card, processor, circuit or chipset for supporting a wireless communication technique which is the same as or similar to that of the controlled device 210, such that the client equipment 300 may communicate with the controlled device 210. The processor 330 is connected with the network connection circuit 310 and the device communication circuit 320. The processor 330 may be a central processing unit (CPU), or any other programmable general purpose or special purpose microprocessor, digital signal processor (DSP), programmable controller, application specific integrated circuit (ASIC) or other similar elements or a combination of the above elements. In the present embodiment, the processor 330 is configured to execute all operations of the client equipment 300.

It should be mentioned that in other embodiments, the client equipment 300 may also be an electronic device, for example, a smart bulb, an intelligent remote control switch, an intelligent door lock, an intelligent sensor, which complies with the MQTT protocol.

The local server 400 may be employed as a broker supporting the MQTT protocol to receive a subscribe request for a specific topic from the client equipment 300 or 600 and/or transmit a published message to a subscriber (e.g., the client equipment 300 or 600), which is referred to as a publishing/subscribing (PubSub) mechanism. In the present embodiment, the client equipment 300 and the local server 400 are combined into one (i.e., both are located in the same device), such that the client equipment 300 may perform operations of the client equipment 300 and the local server 400 respectively through two software modules which are separated from each other and capable of communicating with each other. Additionally, the client equipment 300 and the local server 400 both reside in a local area network (LAN) 250 (or referred to as a local network).

In other embodiments, the client equipment 300 and the local server 400 may also be two independent devices and communicate with each other in a wireless/wired manner.

The network access equipment 230 at least has an LAN interface card, processor, circuit or chipset (for example, an interface supporting the Wi-Fi, Bluetooth or Ethernet communication technique) and a WAN interface card, processor, circuit or chipset (which is, for example, a copper cable supporting digital subscriber line (DSL), an optical fiber supporting passive optical network (PON), or other communication techniques), such that the client equipment 300 residing in the LAN 250 may connect to a wide area network (WAN) 270 (or referred to as an external network) or the Internet.

The remote server 500 is a cloud broker complying with the MQTT protocol and may provide internet of things (IoT) cloud solutions, such as Amazon web service (AWS), Google cloud IoT service or Microsoft Azure IoT service. In the same or similar manner, the remote server 500 may receive a subscribe request for a specific topic from the client equipment 300 or 600 and/or transmit a published message to a subscriber (e.g., the client equipment 300 or 600). Additionally, the remote server 500 resides in the WAN 270 (or referred to as the external network).

The client equipment 600 may be a mobile device, for example, a smart phone, a tablet computer or a notebook computer, and may connect to the local server 400 or the remote server 500. The client equipment 600 may be further loaded with applications compliable with the service provided by the remote server 500 for a user to control the controlled device 210 or obtained related information.

It should be mentioned that in other embodiments, the local server 400 and the remote server 500 may also support other brokers based on the PubSub mechanism, such as a simple notification service (SNS), an extensible messaging and presence protocol (XMPP), while the client equipment 300 or 600 supports the same or a compliable communication protocol. Additionally, the local server 400 and the remote server 500, as long as residing in two different networks, are applicable to the present embodiment.

In the present embodiment, the client equipment 600 connects to the local server 400 via the network access equipment 230. However, in other embodiments, the client equipment 600 may also directly communicate with the local server 400 using the Wi-Fi, Bluetooth, Ethernet technique without the network access equipment 230 only if the client equipment 300 is capable of directly connecting to the WAN 270 or the Internet (for example, through the 4G communication or a network cable).

In order to facilitate understanding of the operation process of the present embodiment, several embodiments will be provided below for describing a message pushing method of the disclosure. The method of the present embodiment is applicable to each element of the message pushing system 1 illustrated in FIG. 1. Hereinafter, the method of the present embodiment will be described with reference to each element and module of the client equipment 300. Each flow of the method may be adjusted according to actual implementation scenarios, and the disclosure is not limited thereto.

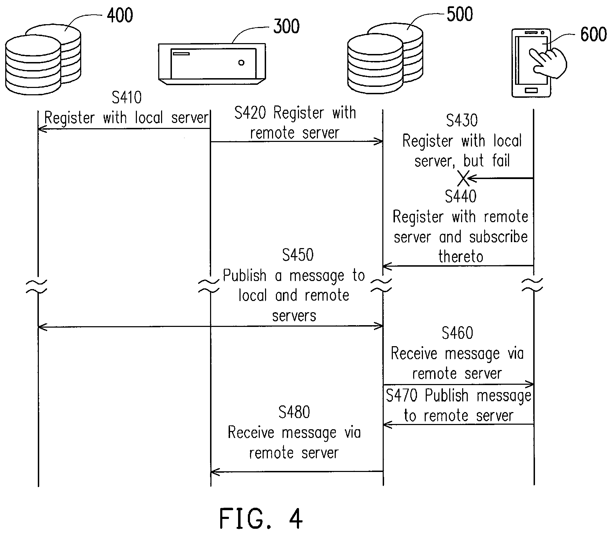

FIG. 4 is a message flow chart illustrating a message pushing method in a remote access scenario according to an embodiment of the disclosure. In this scenario, the client equipment 600 resides in the WAN 270. Referring to FIG. 4, the processor 330 of the client equipment 300 transmits a registration message through the network connection circuit 310 respectively via the LAN 250 and the WAN 270, so as to register with the local server 400 and the remote server 500 (steps S410 and S420). The registration message may be a CONNECT pocket complying with the MQTT protocol or a message for registration based on another communication protocol. The processor 330 of the client equipment 300 may subscribe to a topic (which is assumed as a topic B in this case) from the local server 400 and the remote server 500 via both the LAN 250 and the WAN 270. The client equipment 600 determines whether to register with either the local server 400 or the remote server 500, but upon trying to register with the local server 400, the client equipment 600, due to not residing in the LAN 250, fails in the registration (step S430). The client equipment 600 then registers with the remote server 500 (i.e., the registration would be successful) and subscribes to a topic (which is assumed as a topic A in this case) that the client equipment 300 schedules to publish, and the client equipment 600 also schedules to publish the topic (i.e., the topic B) subscribed by the client equipment 300 (step S440).

If a message related to the topic A is about to be published, the client equipment 300 publishes the message to both the local server 400 and the remote server 500 via the LAN 250 and the WAN 270 (step S450). The remote server 500 transmits the message to all subscribers of the topic A, such that the client equipment 600 receives the message related to the topic A (step S460). On the other hand, if a message related to the topic B is about to be published, the client equipment 600 may publish the message to the remote server 500(step S470), and the remote server 500 transmits the message to all subscribers of the topic B, such that the client equipment 300 receives the message related to the topic B (step S480).

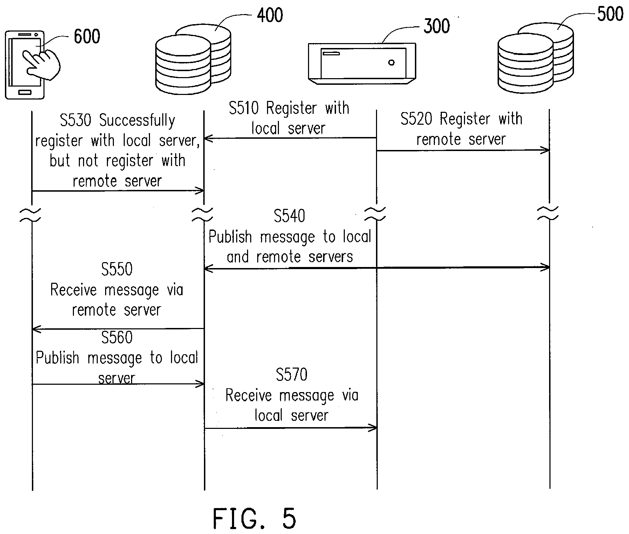

FIG. 5 is a message flow chart illustrating a message pushing method in a local access scenario according to an embodiment of the disclosure. In this scenario, the client equipment 600 resides in the LAN 250. Referring to FIG. 5, the processor 330 of the client equipment 300 registers with the local server 400 and the remote server 500 through the network connection circuit 310 (steps S510 and S520). In this scenario, the client equipment 600 may register with the local server 400 and thus, no longer registers with the remote server 500 (step S530). It should be mentioned that sequences of the client equipment 600 registering with the local server 400 and with the remote server 500 may be exchanged or at the same time, the client equipment 600, as long as completing the registration with any server, does not have to register with another server. In other words, the client equipment 600, if or only if failing in the registration, selects to register with another server.

It is assumed that the client equipment 600 subscribes to a topic (which is assumed as the topic A in this case) that the client equipment 300 schedules to publish, and the client equipment 300 subscribes to a topic (which is assumed as the topic B in this case) that the client equipment client equipment 600 schedules to be publish. If a message related to the topic A is about to be published, the client equipment 300 publishes the message to both the local server 400 and the remote server 500 via the LAN 250 and the WAN 270 (step S540). The local server 400 transmits the message to all subscribers of the topic A, such that the client equipment 600 receives the message related to the topic A (step S550). On the other hand, if a message related to the topic B is to be published, the client equipment 600 publishes the message to the local server 400 (step S470), the local server 400 transmits the message to all subscribers of the topic B, such that the client equipment 300 receives the message related to the topic B (step S570).

In this way, no matter whether the client equipment 600 resides in the LAN 250 or the WAN 270, the client equipment 600, as long as being capable of connecting to one of the local server 400 and the remote server 500, may successfully transmit the published message to the subscribers or successfully receive the subscribed messages, thereby solving the issue of failure in publishing and receiving the messages which is encountered when a disconnection scenario occurs to the existing internet.

In order to facilitate understanding of actual application scenarios of the present embodiment, three examples will be provided below for describing different application scenarios.

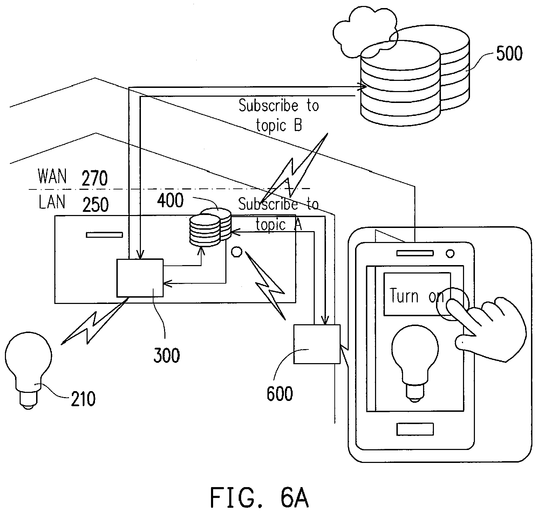

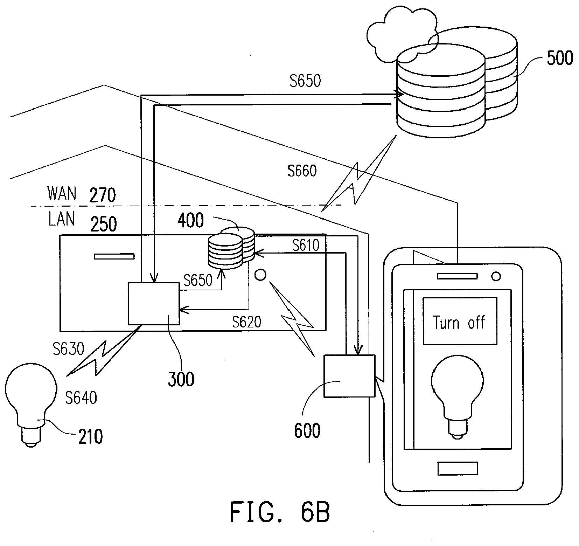

FIG. 6A and FIG. 6B are schematic diagrams of a first scenario example illustrating that that the client equipment 300 is capable of connecting to the WAN 270, and the client equipment 600 resides in the LAN 250. Referring to FIG. 6A first, the client equipment 300 subscribes to the topic B (e.g., turning on/turning off illumination) from the local server 400 and the remote server 50, and the client equipment 600 subscribes to the topic A (e.g., a bulb state) from the local server 400. Referring to FIG. 6B, the client equipment 600 receives an operation of turning on illumination and then publishes the message (i.e., turning on illumination) related to the topic B to the local server 400 (step S610). The local server 400 transmits the message to the client equipment 300 (step S620), the client equipment 300 controls the controlled device 210 (which is assumed as a smart bulb in this case) to be turned on through a Z-Wave technique based on the message (step S630), and the controlled device 210 returns a state that the bulb is turned on to the client equipment 300 (step S640). The client equipment 300 publishes the bulb state to the local server 400 and the remote server 500 (step S650), and the client equipment 600 (which is the subscriber of the topic A) obtains the bulb state via the local server 400 (step S660).

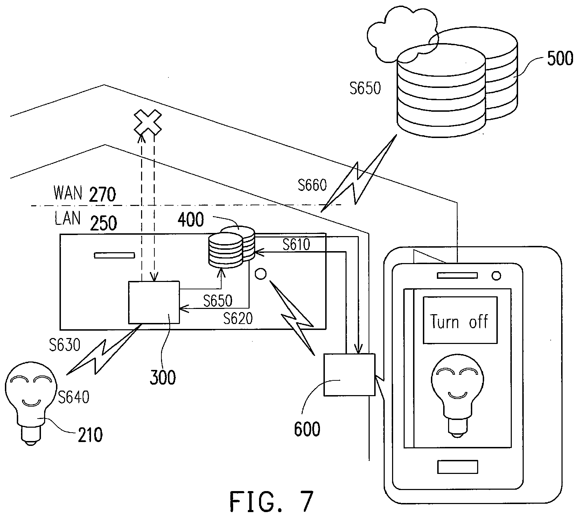

FIG. 7 is a schematic diagram of a second scenario example illustrating that the client equipment 300 fails to connect to the WAN 270, and the client equipment 600 resides in the LAN 250. Referring to FIG. 7, being different from the first scenario example illustrated in FIG. 6A and 6B, the client equipment 300 in the second scenario example fails to publish the bulb state to the remote server 500. However, the bulb state finally may still be transmitted to the client equipment 600 via the local server 400.

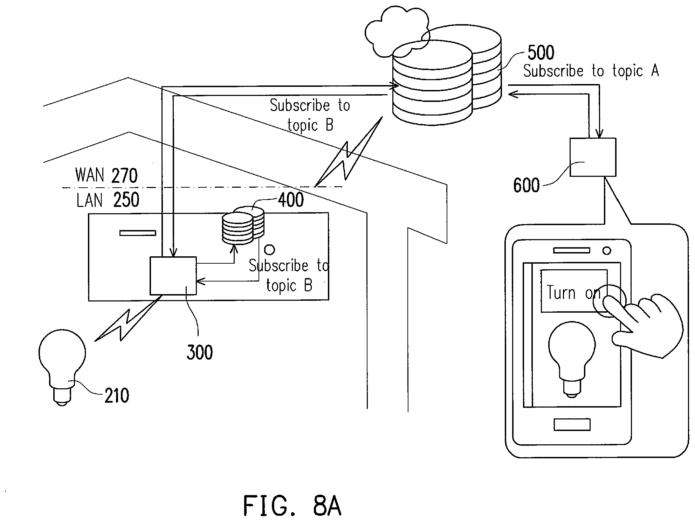

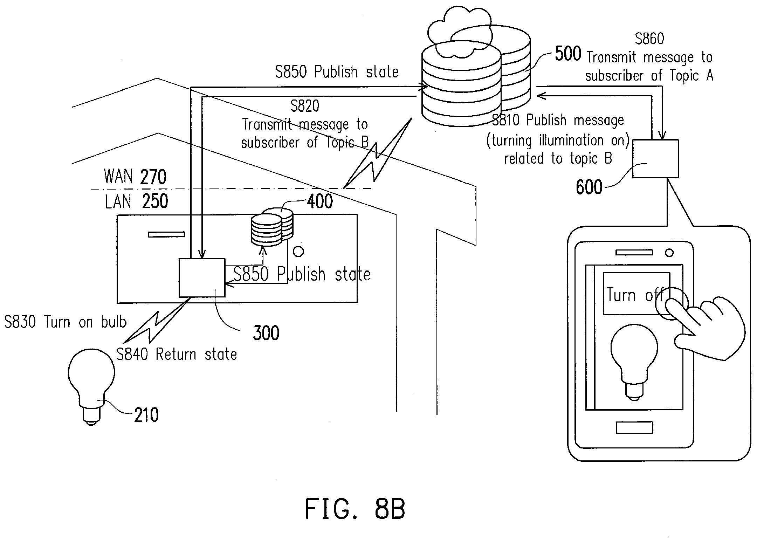

FIG. 8A and FIG. 8B are schematic diagrams of a third scenario example illustrating that the client equipment 300 is capable of connecting to the WAN 270, and the client equipment 600 resides in the WAN 270. Referring to FIG. 8A first, the client equipment 300 subscribes to the topic B (e.g., turning on/turning off illumination) from the local server 400 and the remote server 500, and the client equipment 600 subscribes to the topic A (e.g., a bulb state) from the remote server 500. Referring to FIG. 8B, the client equipment 600 receives an operation of turning on illumination and then publishes the message (i.e., turning on illumination) related to the topic B to the remote server 500 (step S810). The remote server 500 transmits the message to the client equipment 300 (step S820), the client equipment 300 controls the controlled device 210 to be turned on based on the message (step S830), and the controlled device 210 returns the state that the bulbs are turned on to the client equipment 300 (step S840). The client equipment 300 publishes the bulb state to the local server 400 and the remote server 500 (step S850), the client equipment 600 (which is the subscriber of the topic A) may obtain the bulb state via the remote server 500 (step S860).

In light of the foregoing, a local server is newly added in the network where a first client equipment resides in the present embodiment, such that the first client equipment can register with the local server and the remote server and publish messages thereto or receives messages therefrom. No matter whether a second client equipment resides in the same network as the first client equipment or in a network different from that of the first client equipment, the second client equipment, as long as being capable of connecting to the server (e.g., the local server or the remote server) in any one of the networks, can successfully receive the message published by the first client equipment or successfully transmit the published message to the first client equipment. In this way, the user can set the first client equipment and the local server in the same network of the controlled device, such that the user, no matter whether being in the environment where the first client equipment resides or in other environments, can control the controlled device and/or collect information therefrom through the second client equipment.

## Claims

1. A message pushing system (1), **characterized by** comprising:
a first server (400), residing in a first network (250);
a second server (500), residing in a second network (270), wherein the second network (270) is different from the first network (250); and
a first client equipment (300), residing in the first network (250), registering with the first server (400) and the second server (500), and transmitting and receiving messages via at least one of the first server (400) and the second server (500) based on a publishing/subscribing mechanism.

2. The message pushing system (1) according to claim 1, **characterized in that** the first client equipment (300) subscribes to both the first server (400) and the second server (500) and publishes to both the first server (400) and the second server (500).

3. The message pushing system (1) according to claim 1, **characterized in that** further comprising:
a second client equipment (600), determine whether to subscribe to either the first server (400) or the second server (500).

4. The message pushing system (1) according to claim 3, **characterized in that** the second client equipment (600) subscribes to a topic published by the first client equipment (300) from one of the first server (400) and the second server (500).

5. The message pushing system (1) according to claim 3, **characterized in that** the first client equipment (300) subscribes to a topic published by the second client equipment (600) from both the first server (400) and the second server (500).

6. The message pushing system (1) according to claim 1, **characterized in that** the first client equipment (300) performs an operation of the first server (400).

7. The message pushing system (1) according to claim 1, **characterized in that** the publishing/subscribing mechanism complies with a message queue telemetry transport, named MQTT hereinafter, protocol.

8. A message pushing method, applicable for a server (400), **characterized by** comprising:
providing the server (400) residing in a first network (250);
transmitting a registration message via a first network (250) and a second network (270), wherein the second network (270) is different from the first network (250); and
transmitting and receiving messages via at least one of the first network (250) and the second network (270) based on a publishing/subscribing mechanism.

9. The message pushing method according to claim 8, **characterized in that** the step of transmitting and receiving the messages via at least one of the first network (250) and the second network (270) based on the publishing/subscribing mechanism comprises:
subscribing through both the first network (250) and the second network (270); and
publishing through both the first network (250) and the second network (270).

10. The message pushing method according to claim 8, **characterized in that** the publishing/subscribing mechanism complies with an MQTT protocol.

11. A client equipment (300), residing in a first network (250), the client equipment (300) **characterized by** comprising:
a communication circuit (310), transmitting and receiving messages; and
a processor (330), coupled to the communication circuit (310), transmitting a registration message through the communication circuit (310) via the first network (250) and a second network (270), and transmitting and receiving the messages via one of the first network (250) and the second network (270) based on a publishing/subscribing mechanism, wherein the second network (270) is different from the first network (250).

12. The client equipment according to claim 11, **characterized in that** the processor (330) subscribes through the communication circuit (310) via both the first network (250) and the second network (270) and publishes via both the first network (250) and the second network (270).

13. The client equipment according to claim 11, **characterized in that** the publishing/subscribing mechanism complies with an MQTT protocol.
